# EUROPÄISCHE PATENTSCHRIFT

(11) **EP 2 186 453 B1**
(45) Veröffentlichungstag und Bekanntmachung des Hinweises auf die Patenterteilung: **21.12.2011**
(21) Anmeldenummer: 10152230.8
(22) Anmeldetag: 03.08.2006
(51) Int. Cl.: A47J 27/00, A47J 27/21

(54) **Küchengefäss mit einem Heizboden**
Kitchen vessel with a heating base
Récipient de cuisine à fond chauffant

(30) Priorität: 06.08.2005 DE 102005037191
(43) Veröffentlichungstag der Anmeldung: 19.05.2010
(62) Teilanmeldung aus: 06778161.7
(73) Patentinhaber: Vorwerk & Co. Interholding GmbH, 42275 Wuppertal (DE)
(72) Erfinder: Schiffer, Ernst-Uwe, 42111, Wuppertal (DE); Hellrung, Dirk, 45239, Essen (DE)
(74) Vertreter: Müller, Enno

(56) Entgegenhaltungen:
- DE-A1- 10 226 939
- GB-A- 2 282 007
- US-A- 3 610 884
- US-A- 4 063 068

## Beschreibung

Die Erfindung betrifft ein Küchengefäß mit einer Gefäßwandung und einem Heizboden, der elektrisch beheizt wird, wobei der Heizboden aus einem Widerstand-Heizelement besteht, das über an dem Heizboden unterseitig angeordnete Steckvorsprünge elektrisch kontaktiert ist, wobei die Steckvorsprünge an einem unterseitig des Widerstand-Heizelements angeordneten Zweitboden gehaltert sind.

Küchengefäße der in Rede stehenden Art sind bekannt, so beispielsweise in Form von beheizbaren Gefäßen für Küchenmaschinen oder auch in Form von Wasserkochern. Unabhängig von der Art und Ausgestaltung der bekannten Küchengefäße sind diese einem gesonderten Aufsetzadapter, über welchen die Stromversorgung erfolgt, zuordbar. Bei einer Anordnung eines Küchengefäßes der in Rede stehenden Art in einer Küchenmaschine formt ein Gehäuseteil der Küchenmaschine diesen Aufsetzadapter aus. Letzterer verfügt in der Regel über Aufnahmebuchsen oder dergleichen für die bodenseitigen Steckvorsprünge des Küchengefäßes, um hierüber die elektrische Kontaktierung des Heizbodens zu ermöglichen.

Ein derartiges Küchengefäß ist beispielsweise aus der DE 102 26 939 A1 bekannt.

Im Hinblick auf den zuvor beschriebenen Stand der Technik wird die Aufgabe der Erfindung darin gesehen, ein Küchengefäß der in Rede stehenden Art im Hinblick auf eine gewünschte Spülmaschineneignung weiter zu verbessern.

Diese Aufgabe ist durch den Gegenstand des Anspruches 1 gelöst, wobei darauf abgestellt ist, dass die Steckvorsprünge mit dem Zweitboden mittels eines vernetzenden Klebers in nur durch Zerstörung aufhebbarer Verbindung verklebt sind und der Zweitboden einstückig mit der Gefäßwandung gefertigt ist.

Aufgrund der klebenden Eigenschaften der Verbindung wird eine Trennung der beiden Bauteile, nämlich eine Trennung von Steckvorsprung und Zweitboden verhindert. Die einmal durchgeführte Verbindung ist beispielsweise seitens des Benutzers nicht, zumindest nicht zerstörungslos, aufhebbar. Da weiter der Zweitboden einstückig mit der Gefäßwandung ausgebildet ist, ist auch keine weitere Trennstelle gegeben. Entsprechend ist die erforderliche Abdichtung stets gegeben. Bevorzugt bedarf es zum Erreichen der gewünschten Abdichtung zwischen Steckvorsprung und Zweitboden keiner weiteren mechanischen Hilfsmittel, wie beispielsweise Schrauben oder dergleichen, was neben dem vorgenannten Effekt einer nicht zerstörungsfreien Abnahme des Steckvorsprungs vom Zweitboden noch den zusätzlichen Vorteil einer Bauraumverringerung beinhaltet. Durch die gewählte Abdichtung mittels eines vernetzenden Klebers bei einteiliger Ausbildung von Gefäßwandung und Zweitboden ist ein spülmaschinengeeignetes Küchengefäß mit einem elektrisch kontaktierbaren Heizboden geschaffen, wobei die die Verbindung des Steckvorsprunges mit dem Zeitboden bildenden Klebmasse zugleich die geforderte Wasserdichte herstellt.

In einer vorteilhaften Weiterbildung des Erfindungsgegenstandes ist vorgesehen, dass der Klebstoff silikonbasiert ist. So wird weiter bevorzugt ein Zwei-Komponenten-Silikon als Kleb-/Dichtstoff eingesetzt. So kann es sich diesbezüglich weiter beispielsweise um einen kondensationsvernetzenden Zwei-K-Silikonkleber handeln. In vorteilhafter Weise ist hierdurch eine elastische Abdichtung zwischen dem Steckvorsprung und dem Zweitboden erreicht, was in vorteilhafter Weise dazu führt, dass Längen- und Druckänderungen, welche belastungswechselbedingt durch Temperaturschwankungen sowohl im Betrieb als auch während eines Spülmaschinendurchganges auftreten, ausgeglichen werden können. Während die Dichtungen aus dem bekannten Stand der Technik durch Zwischenlage eines Dichtringes beispielsweise über eine Rastverbindung auf Vorspannung gehalten sind, ist bei der erfindungsgemäßen Lösung vorgesehen, dass die Verbindung vorspannungsfrei ist. Entsprechend ist die Kleb-/Dichtverbindung kraftlos gehalten. Während bei einer Abdichtung gemäß dem Stand der Technik die benötigte Vorspannung im Laufe der Zeit durchaus nachgeben kann, was einhergeht mit einer Verschlechterung der Dichteigenschaften, ist gemäß vorliegender Erfindung die geforderte Dichtung aufgrund der vorspannungsfreien Eigenschaften stets erreicht. Vorgesehen ist diesbezüglich weiter, dass der Steckvorsprung einen außen am dem Zwischenboden anliegenden Halterungsteller aufweist und dass die Klebeverbindung im radial äußeren Bereich des Halterungstellers realisiert ist. Letzterer ist weiter bevorzugt modulartig ausgeformt und trägt in der Regel zwei Steckvorsprünge sowie weiter beispielsweise für den Heizbetrieb erforderliche Bauteile, wie Sensoren oder dergleichen. Auch wird vorgeschlagen, dass die an dem Steckvorsprung ausgebildete Klebefläche aus Kunststoff besteht und die an dem Zwischenboden ausgebildete Klebefläche aus Edelstahl. Selbst diese Materialkombination lässt sich mittels des vorgesehenen, silikonbasierenden Klebstoffes wasserdicht und dauernd, insbesondere nicht zerstörungsfrei aufhebbar, miteinander verbinden.

Nachstehend ist die Erfindung anhand der beigefügten Zeichnung, welche lediglich ein Ausführungsbeispiel darstellt, näher erläutert. Es zeigt:
- Fig. 1: eine Ansicht gegen eine Küchenmaschine mit einem erfindungsgemäßen Küchengefäß;

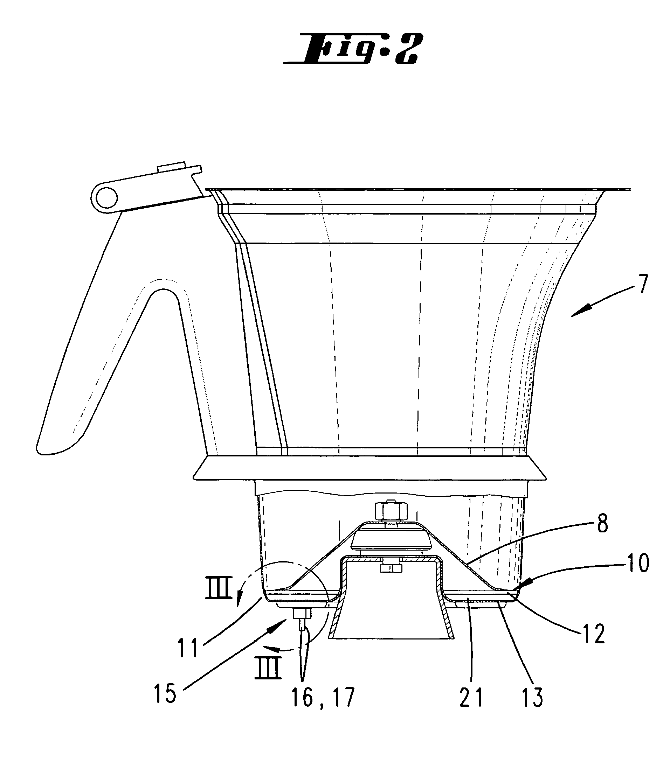

- Fig. 2: das Küchengefäß in Einzeldarstellung mit einem partiell aufgebrochen dargestellten Bodenbereich;
- Fig. 3: die Ausschnittvergrößerung gemäß III in Fig. 2.

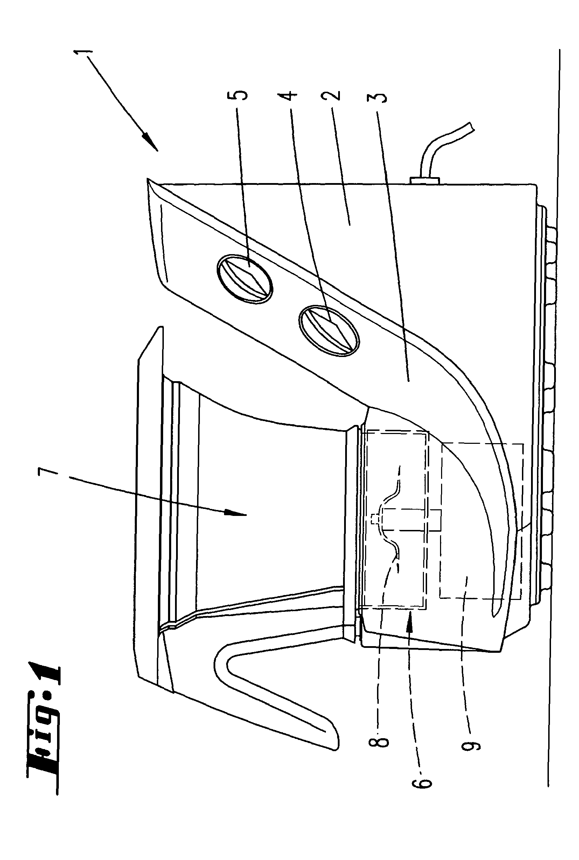

Dargestellt und beschrieben ist zunächst mit Bezug zu Fig. 1 eine Küchenmaschine 1 mit einem Gehäuse 2, welch letzteres ein Bedienfeld 3 aufweist. Dieses Bedienfeld 3 trägt einen Temperaturwähler 4 sowie einen Drehzahlsteller 5.

Des Weiteren weist das Gehäuse 2 einen einen Aufsetzadapter 6 ausbildenden Aufnahmebereich für ein Küchengefäß 7 in Form eines beheizbaren Rührgefäßes auf. In dem dargestellten Ausführungsbeispiel besitzt das Küchengefäß 7 ein Rührwerk 8. Dieses ist über eine nicht näher dargestellte Kupplung bei in dem Aufsetzadapter 6 eingesetztem Küchengefäß 7 mit einem über den Drehzahlsteller 5 regelbaren Elektromotor 9 in Verbindung gebracht.

Zudem ist das Küchengefäß 7 bodenseitig mit einem Widerstand-Heizelement 10 in Form einer Dickschichtheizung versehen. Demzufolge erfolgt eine Beheizung des Küchengefäßes 7 von der Unterseite her über dünne Heizungsbahnen, die auf eine emaillierte, den Gefäßboden 11 ausbildende Edelstahlplatte gedruckt sind. Ein Schutzlack, der über die metallischen Bahnen aufgetragen wird, dient zur Passivierung. Bezüglich der Ausbildung des Widerstand-Heizelements 10 wird auf die Patentanmeldung DE 10019126 A1 verwiesen.

An einem zu dem Heizboden 12 beabstandeten Zweitboden 13, welcher einstückig mit der Gefäßwandung aus Edelstahl gefertigt ist, ist im Bereich einer entsprechend ausgebildeten ZweitbodenÖffnung 14 ein Kontaktmodul 15 gehaltert, welch letzteres zwei, der Stromversorgung dienende Steckvorsprünge 16,17, sowie einen Temperaturfühler 18 trägt, wobei die stromführenden Steckvorsprünge 16, 17 den Hohlraum 21 zwischen Heizboden 12 und Zweitboden 13 durchsetzend, das Heizelement 10 bzw. die aufgedruckten Leiterbahnen desselben elektrisch kontaktieren.

Das die Steckvorsprünge 16, 17 sowie den Temperaturfühler 18 tragende Kontaktmodul 15 ist aus einem Kunststoffwerkstoff hergestellt.

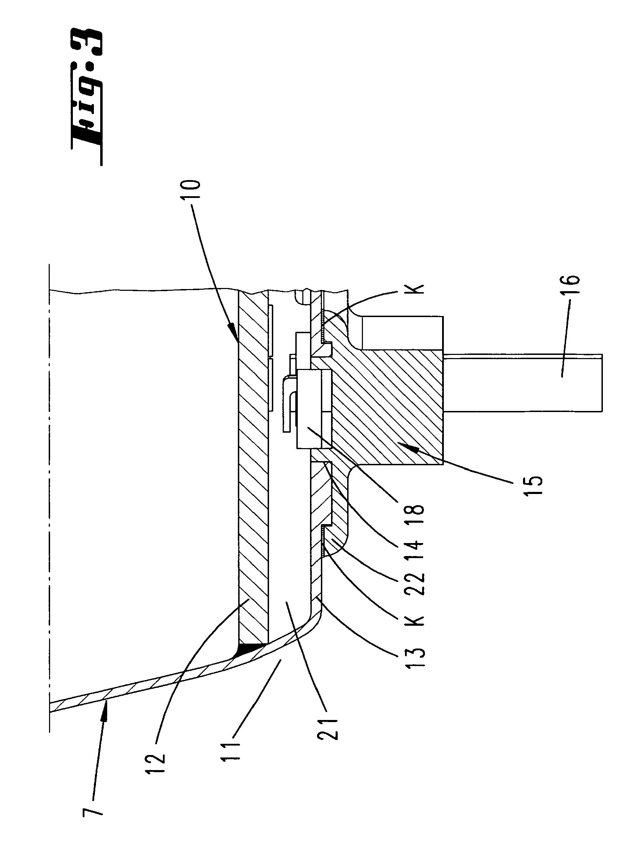

Während der Heizboden 12 innenwandig des Küchengefäßes 7 mit Abstand zum gefäßseitigen Zweitboden 13 durch Verschweißung festgelegt ist, ist die dauerhafte Anordnung des Kontaktmoduls 15 an dem Zweitboden 13 durch Verklebung erreicht. Die Klebestellen sind in der Darstellung in Fig. 3 durch das Bezugszeichen K gekennzeichnet. Wie zu erkennen, ist die Verklebung im radial äußeren Bereich eines aus dem Kontaktmodul 15 herausgeformten Halterungstellers 22 realisiert, wobei entsprechend der gewählten Materialien einer Klebefläche aus Kunststoff eine Klebefläche aus Edelstahl gegenübersteht.

Die Verklebung ist umlaufend entlang der gesamten Randkante des Kontaktmoduls 15 vorgesehen.

Die Verklebung erfolgt mittels eines vernetzenden Klebers, welcher silikonbasiert ist und zufolge dessen dauerhaft elastische Eigenschaften aufweist. So kommt in dem dargestellten Ausführungsbeispiel ein kondensationsvernetzender Zwei-Komponenten-Silikonkleber zum Einsatz. Die hierdurch geschaffene Verbindung zwischen Kontaktmodul 15 und Zweitboden 13 ist aufgrund der elastischen Eigenschaften dauerhaft wasserdicht. Auch kurzzeitige Belastungswechsel bedingt durch Temperaturschwankungen wirken sich nicht nachteilig auf die Dicht- und Klebeeigenschaften aus.

Neben der Klebeverbindung sind keine weiteren mechanischen Verbindungen, wie Schraub- oder Rastverbindungen vorgesehen, zufolge dessen die vorgesehene Klebeverbindung vorspannungsfrei ist.

## Patentansprüche

1. Küchengefäße (7) mit einer Gefäßwandung und einem Heizboden (12), der elektrisch beheizt wird, wobei der Heizboden (12) aus einem Widerstand-Heizelement (10) besteht, das über an dem Heizboden (12) unterseitig angeordnete Steckvorsprünge (16, 17) elektrisch kontaktiert ist, wobei die Steckvorsprünge (16, 17) an einem unterseitig des Widerstand-Heizelementes (10) angeordneten Zweitboden (13) gehaltert sind, **dadurch gekennzeichnet, dass** die Steckvorsprünge (16, 17) mit dem Zweitboden (13) mittels eines vernetzenden Klebers in nur durch Zerstörung aufhebbarer Verbindung (K) verklebt sind, und dass der Zweitboden (13) einstückig mit der Gefäßwandung gefertigt ist.

2. Küchengefäß nach Anspruch 1, **dadurch gekennzeichnet, dass** der Klebstoff silikonbasiert ist.

3. Küchengefäß nach einem der vorhergehenden Ansprüche, **dadurch gekennzeichnet, dass** die Verbindung (K) vorspannungsfrei ist.

4. Küchengefäß nach einem der vorhergehenden Ansprüche, **dadurch gekennzeichnet, dass** die Steckvorsprünge (16, 17) einen außen an dem Zwischenboden (13) anliegenden Halterungsteller (22) aufweisen und dass die Klebeverbindung (K) im radial äußeren Bereich des Halterungstellers (22) realisiert ist.

5. Küchengefäß nach einem der vorhergehenden Ansprüche, **dadurch gekennzeichnet, dass** die an den Steckvorsprüngen (16, 17) ausgebildete Klebefläche aus Kunststoff besteht und die an dem Zweitboden (13) ausgebildete Klebefläche aus Edelstahl.

6. Küchengefäß nach einem der vorhergehenden Ansprüche, **dadurch gekennzeichnet, dass** der Zweitboden (13) eine Zweitbodenöffnung (14) aufweist, in der ein Kontaktmodul (15) gehaltert ist.

7. Küchengefäß nach Anspruch 6, **dadurch gekennzeichnet, dass** das Kontaktmodul (15) zwei der Stromversorgung dienende Steckvorsprünge (16,17) aufweist.

8. Küchengefäß nach einem der vorhergehenden Ansprüche, **dadurch gekennzeichnet, dass** die Steckvorsprünge (16, 17) einen Hohlraum (21) zwischen dem Heizboden (12) und dem Zweitboden (13) durchsetzen und das Heizelement (10) bzw. aufgedruckte Leiterbahnen des Heizelementes (10) elektrisch kontaktieren.

9. Küchengefäße nach einem der vorhergehenden Ansprüche, **dadurch gekennzeichnet, dass** der Heizboden (12) innenwandig des Küchengefäßes (7) mit Abstand zum gefäßseitigen Zweitboden (13) durch Verschweißung festgelegt ist.

## Claims

1. Kitchen vessel (7) with a vessel wall and a heating base (12) which is electrically heated, the heating base (12) comprising a resistance heating element (10) with which electrical contact is made by means of plug-in projections (16, 17) which are disposed on the underside of the heating base (12), the plug-in projections (16, 17) being mounted on a second base (13) which is disposed underneath the resistance heating element (10), **characterized in that** the plug-in projections (16, 17) are adhesively bonded to the second base (13) by means of a crosslinking adhesive with a connection (K) which can only be broken by destroying said connection and **in that** the second base (13) is produced integrally with the vessel wall.

2. Kitchen vessel according to Claim 1, **characterized in that** the adhesive is silicone-based.

3. Kitchen vessel according to either of the preceding claims, **characterized in that** the connection (K) is free of prestress.

4. Kitchen vessel according to any of the preceding claims, **characterized in that** the plug-in projections (16, 17) have a mounting plate (22) which rests against the outside of the second base (13), and **in that** the adhesive connection (K) is realized in the radially outer region of the mounting plate (22).

5. Kitchen vessel according to any of the preceding claims, **characterized in that** the adhesive surface which is formed on the plug-in projections (16, 17) comprises a plastics material and the adhesive surface which is formed on the second base (13) comprises stainless steel.

6. Kitchen vessel according to any of the preceding claims, **characterized in that** the second base (13) has a second-base opening (14), in which a contact module (15) is mounted.

7. Kitchen vessel according to Claim 6, **characterized in that** the contact module (15) has two plug-in projections (16, 17) which serve for the supply of power.

8. Kitchen vessel according to any of the preceding claims, **characterized in that** the plug-in projections (16, 17) pass through a hollow space (21) between the heating base (12) and the second base (13) and contact electrically the heating element (10) or printed circuits of the element (10).

9. Kitchen vessel according to any of the preceding claims, **characterized in that** the heating base (12) is secured by welding to the inner wall of the kitchen vessel (7) at a spacing from the vessel side of the second base (13).

## Revendications

1. Récipient de cuisine (7) avec une paroi de récipient et un fond chauffant (12), chauffé électriquement, le fond chauffant (12) étant composé d'un élément chauffant à résistance (10), mis en contact électriquement par l'intermédiaire de saillies d'embrochage (16, 17) disposées en face inférieure sur le fond chauffant (12), les saillies d'embrochage (16, 17) étant maintenues sur un fond double (13), disposé en face inférieure de l'élément chauffant à résistance (10), **caractérisé en ce que** les saillies d'embrochage (16, 17) sont collées au fond double (13), au moyen d'un adhésif réticulant, en une liaison (K) ne pouvant être supprimée que par destruction, et **en ce que** le fond double (13) est fabriqué d'une seule pièce avec la paroi de récipient.

2. Récipient de cuisine selon la revendication 1, **caractérisé en ce que** l'adhésif est à base de silicone.

3. Récipient de cuisine selon l'une des revendications précédentes, **caractérisé en ce que** la liaison (K) est exempte de précontrainte.

4. Récipient de cuisine selon l'une des revendications précédentes, **caractérisé en ce que** les saillies d'embrochage (16, 17) présentent un plateau de fixation (22) appuyant extérieurement sur le fond double (13), et **en ce que** la liaison adhésive (K) est réalisée dans une zone radialement extérieure du plateau de fixation (22).

5. Récipient de cuisine selon l'une des revendications précédentes, **caractérisé en ce que** les faces d'adhésif, réalisées sur les saillies d'embrochage (16, 17), sont réalisées en matière synthétique et la face d'adhésif réalisée sur le fond double (13) est composée d'acier spécial.

6. Récipient de cuisine selon l'une des revendications précédentes, **caractérisé en ce que** le fond double (13) présente une ouverture de fond double (14), dans laquelle est maintenu un module de contact (15).

7. Récipient de cuisine selon la revendication 6, **caractérisé en ce que** le module de contact (15) présente deux saillies d'embrochage (16, 17), servant à l'alimentation en courant électrique.

8. Récipient de cuisine selon l'une des revendications précédentes, **caractérisé en ce que** les saillies d'embrochage (16, 17) traversent un espace creux (21), entre le fond chauffant (12) et le fond double (13), et établissent le contact électrique avec l'élément chauffant (10) ou des pistes conductrices imprimées de l'élément chauffant (10).

9. Récipient de cuisine selon l'une des revendications précédentes, **caractérisé en ce que** le fond chauffant (12) est fixé, par soudage, en paroi intérieure du récipient de cuisine (7), à une certaine distance du fond double (13) situé côté récipient.
